# EUROPEAN PATENT SPECIFICATION

(11) **EP 1 450 597 B1**
(45) Date of publication and mention of the grant of the patent: **12.09.2007**
(21) Application number: 02789079.7
(22) Date of filing: 21.11.2002
(51) Int. Cl.: A01G 29/00

(54) **INSERTION DEVICE**
EINFÜHRVORRICHTUNG
DISPOSITIF ET PROCEDE D'INSERTION

(30) Priority: 23.11.2001 SE 0103923
(43) Date of publication of application: 01.09.2004
(73) Proprietor: Aquab AB, 147 30 Tumba (SE)
(72) Inventor: KARLSSON, Thomas, S-163 71 Spånga (SE); SÖRENSSON, Rolf, S-145 60 Tullinge (SE); KERSTEN, Arno, S-113 50 Stockholm (SE); CENIC, Jovan, S-147 92 Grödinge (SE); ZIVKOVIC, Dejan, S-147 34 Tumba (SE)
(74) Representative: Johansson Webjörn, Ingmari
(86) International application number: PCT/SE2002/002122
(87) International publication number: WO 2003/043409

(56) References cited:
- US-A- 4 344 250
- US-A- 5 341 594
- US-A- 5 425 201
- US-A- 5 873 190

## Description

### FIELD OF INVENTION

The insertion device relates to the introduction of herbicidal or nutritional substance into the trunk of a tree, with the aid of a sleeve or plug containing said substance and inserted into the trunk.

### DESCRIPTION OF THE BACKGROUND ART

Coping with undergrowth, underbrush and root suckers effectively and with the slightest possible influence on the environment has been a problem for many years. The task of fighting against underbrush, undergrowth and root suckers with the aid of brush saws along electricity supply avenues is highly expensive. Electricity network companies have earlier used aerial spraying or manual spraying with the aid of hand pumps and a back-carried tank. This has resulted in the death of all growth in the sprayed areas.

In recent years, different methods of selectively inserting a herbicide into tree stumps have been tried The technique is based on allowing growth sap to transport the herbicide down into the root system, so as to kill the root and therewith prevent regrowth.

An earlier known technique is disclosed in SE Patent 8701680-4 with correspondence in U.S. Patent 4,905,410 under the trademark ECOPLUG®. This method has been successful, and involves the insertion of a mechanical two-part plastic plug, wherewith the plug walls break to form passages when driving in the plug and therewith release a herbicide. The problem with this solution, however, is that there remains in the stumps an undesirable amount of plastic material that does not break down or decompose over a foreseeable future. Several different materials and techniques have been tested in an effort to avoid this problem.

Other problems encountered with given devices and methods are associated with attempts to avoid the herbicide exiting from the stumps before it has been taken up by the sap.

### OBJECT OF THE INVENTION

The inventive insertion device and the inventive method enables brush, undergrowth and root suckers to be combated selectively with as little influence on the environment as possible.

The properties of the insertion device also enable different nutrients to be introduced into trees, with the intention of curing different sicknesses or fungi attack.

### SUMMARY OF THE INVENTION

The aforesaid object is fulfilled by the present invention as defined in the independent Claims. Suitable embodiments of the invention are defined in the dependent Claims.

The invention relates to an insertion sleeve which is intended for the insertion of a glyphosate, for example the product MON 14420-G (Round up Max®) from Monsanto or a nutritional substance into the trunk or stump of a tree, through a hole formed with the aid of a tubular striking or cutting devicepipe. The glyphosate/nutritional substance is there released in the closure means within the stump.

The insertion device is comprised of a sleeve that shall open in a manner such to allow the sap to come into contact with the herbicide. The sleeve shall keep the herbicide in the hole, until it has been taken up by the sap. The sleeve shall not leave any material remaining when work has been completed. Moreover, it shall be easy to insert the sleeve into tree stumps, without the sleeve buckling, bending or breaking prior to having been driven into the stump.

The invention is based on a technique in which the specific properties of a material are utilised.

Trials have been carried out with sleeves of mutually different designs. For example, tests have been carried out with a sleeve produced entirely of polyvinyl alcohol and provided with weakenings at its sides, with the thought that the sap would loosen up (dissolve) the sleeve at said weakenings prior to the remaining part of the sleeve being dissolved, therewith breaking up or dissolving the closure means. The sleeve did not function as intended, since most of the herbicide, in the form of glyphosate, ran out of the stump. Furthermore, several of the sleeves broke before they were tested. However, corresponding weakenings in a sleeve provided with a herbicide sealing element in, e.g., wood, in combination with a container comprised of polyvinyl alcohol provided an advantageous embodiment of an inventive insertion device. Pointed conical configurations of a corresponding insertion device for soft plant parts where the insertion end of said device is pointed while the end to which pressure is applied includes a large surface are also advantageous when said configurations include said weakenings.

A sleeve that included a hat or cap was also tested, the idea being that the sap would dissolve the sleeve and therewith come into contact with the glyphosate. This device also failed to function satisfactorily, since the hat became oily and exited from the sleeve before the sap could reach the glyphosate.

However, this promoted an idea of how the sleeve should be designed. If the sleeve was reversed so that the actual closure means was situated in the tree or stump, then this would provide an effective way of causing the sleeve to open quickly, and if the correct amount of plastic material was used the impact or pressure application part of the sleeve would expand and close the hole until the sap had taken up all glyphosate and transported it down into the root system.

The herbicide chosen is a glyphosate, which has a very short life span, about two weeks, in the environment, and no environmental problems have been documented in respect of this substance. Glyphosate is a tested substance that has also been used in conjunction with earlier known insertion methods.

The sleeve is comprised of a hydroplastic material, which was invented more than fifty years ago and is used today primarily in the manufacture of environmentally friendly plastic bags. Hydroplastic is comprised mainly of carbon and alcohol atoms. Polyvinyl alcohol, PVOH, is an example of a hydroplastic material. The material is seven times more air-impervious and nine times as strong as petroleum plastic. Hydroplastic is resistant to acids and oils. The material, however, is dissolvable in water, which is an advantage in the present case. Since hydroplastic is comprised of carbon and an alcohol group, it will leave no toxic substances in the surrounding nature after the sleeve has completed its work.

### BRIEF DESCRIPTION OF THE DRAWINGS

The invention will now be described in more detail with reference to exemplifying embodiments thereof and also with reference to the accompanying drawings, in which
- Figure 1: is a sectional view of a tree trunk provided with a first embodiment of an inventive insertion device;
- Figure 2: is an axial sectioned view of the embodiment shown in Fig. 1;
- Figure 3: is an end view of the plug according to Fig. 1 from its impact or striking side;
- Figure 4: is a sectional view taken on the line A-A in Fig. 2;
- Figure 5: shows the outside of the plug;
- Figure 6: is an end view of a second embodiment of the invention;
- Figure 7: is a side view of the Fig. 6 embodiment;
- Figure 8: is a sectional view of the Fig. 7 embodiment taken on the line B-B;
- Figure 9: is an end view of a third embodiment of the invention;
- Figure 10: is a side view of the Fig. 9 embodiment; and
- Figure 11: is a sectional view of the Fig. 10 embodiment, taken on the line C-C.

### DESCRIPTION OF THE INVENTION

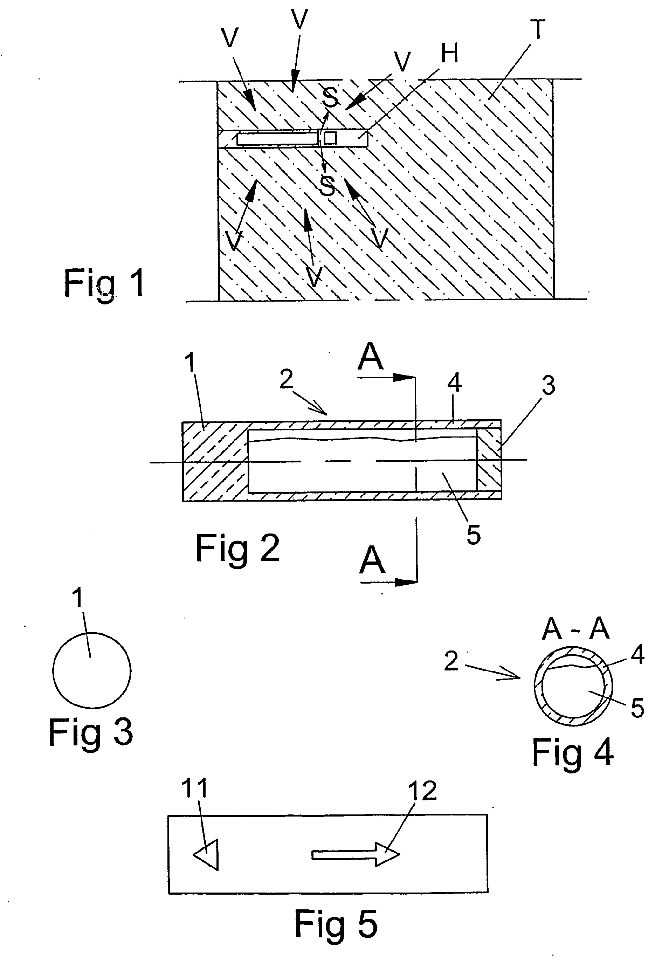

Figure 1 is a sectional view of a tree trunk T, in which a deep, radially extending hole H has been drilled. An insertion device I has been pressed or hammered into the hole, with the closure end of the device facing inwards. In this case, the device is influenced by the sap V in the trunk, see the arrows in the figure, such as to cause the material of which the device is made to swell and therewith seal the hole on the one hand, and to press out said closure means into the relatively deep hole on the other hand. As will be seen from the figure, the closure means has slid out from the device and therewith allows the trunk T free access to the herbicide or a nutritional substance enclosed in the device; see the substance arrows S in this regard.

Figure 2 illustrates a tubular hydroplastic plug according to Figure 1, consisting of three parts, these consisting of a striking head in a manoeuvring end 1 of the device, a container 2 and a closure means 3. The container is delimited by a container wall 4 and contains a herbicide or a nutrient substance 5. The insertion sleeve is hammered or forced into the tree, with the closure end first, and a chemical process between the sap and the hydroplastic begins when the closure means 3 comes into contact with the sap. The hydroplastic begins to swell and the closure means 3 becomes "oily", wherewith the closure means begins to creep out of the insertion sleeve and therewith release the herbicide/nutrient substance from the container 2. The striking head is homogenous and seals the hole as the head expands, therewith preventing the herbicide/nutrient substance from exiting through the hole.

Figure 3 illustrates the cylindrical hydroplastic plug from its impact or force application side, showing the impact head in the manoeuvring end 1 of the device. It will be evident from Figures 2 and 3 that the plug is cylindrical along its full length.

Figure 4 is a sectioned view through the plug shown in Figure 2, from which it will also be evident that the container 2 delimited by the container wall 4 includes a cylindrical volume in which the herbicide cr the nutrient substance 5 is enclosed. A liquid level has been indicated in both Figures 2 and 5, to clearly indicate the substance, although the substance may alternatively be in a solid state or a gas state.

Figure 5 illustrates the barrel surface of the hydroplastic plug that has been provided with an impact indication mark 11 and an insertion direction mark 12, these marks consisting of promontories in the material.

The *modus operandi* of the inventive method will now be described with reference to Figure 1: Upon completion of a clearing operation, the stumps that remain are plugged. This is achieved by drilling a hole or, alternatively, by cutting a hole with the aid of a tubular cutting tool on one side of the stump, preferably adjacent the root suckers present, said hole having a size of 10 mm and a depth of at least 5 cm. The number of sleeves used is determined by the diameter of the stump, this number corresponding to one sleeve for each 10 cm of diameter. The sleeve is then forced into the hole with the closure means end first, and has a deviating colour, e.g. red. The hole shall have a depth of at least 5 cm, so that after being forced into the trunk or stump the closure means will open and therewith provide the sap access to the glyphosate/nutrient substance. When the closure means comes into contact with the sap it becomes "oily" and therewith causes the closure means to exit from the sleeve and into the hole in the stump or tree trunk, such as to release the glyphosate/nutrient substance and to be dissolved by the sap. The sap then transports the glyphosate/nutrient substance down into the root system, therewith killing the root in the former instance or deliver nutrient to the tree and therewith cure the tree of its illness in the latter instance. The impact part/manoeuvring part is constructed to expand and seal the hole, such as to prevent the glyphosate/nutrient substance from running out of the tree stump. When the glyphosate/nutrient substance has been taken up by the sap and transported down into the root system, the hydroplastic will begin to dissolve in contact with rainwater and sap. The material will have dissolved within the space of one year, while leaving no contaminants.

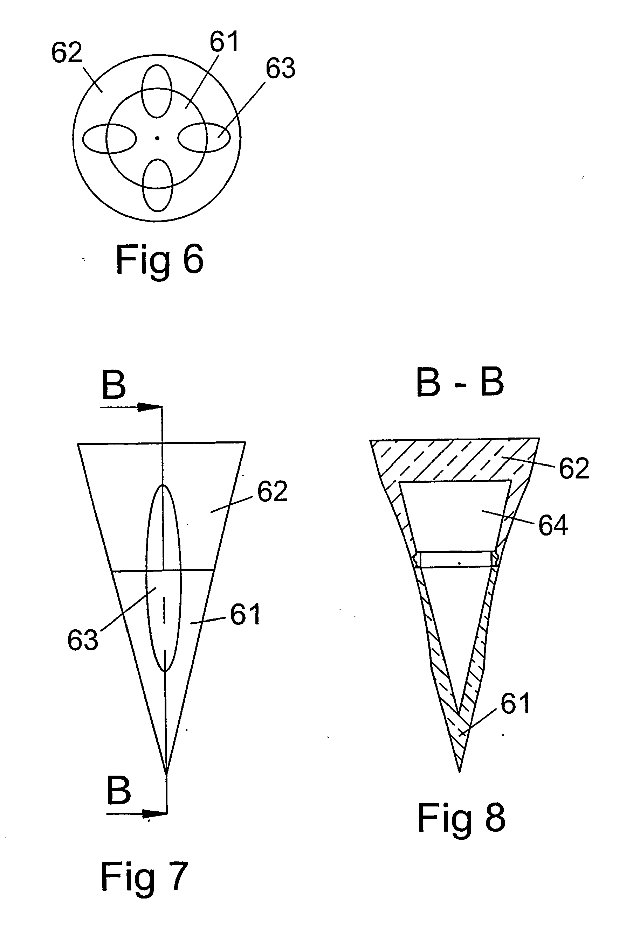

Figure 6 shows from one end a second embodiment of an inventive insertion device. This device comprises a pointed insertion part 61 and a pressure applying part 62. These parts together form a container that encloses a herbicide or a nutrient substance. The container is preferably comprised of a plastic material consisting mainly of carbon atoms and alcohol atoms, e.g. polyvinyl alcohol. The plastic container material includes four thinnings 63 which function to allow the sap to come into contact with the substance introduced more quickly, for rapid spreading in the plant.

Figure 7 is a side view of the embodiment according to Figure 6, from which it will be seen that the device has a conical configuration. The figure clearly shows the pointed insertion part 61 and the planar pressure applying part 62, which has a large pressure surface. Also shown in Figure 7 are the elliptical thinnings 63 that extend longitudinally over both of said parts centrally of the device.

Figure 8 is a sectional view of the device shown in Figure 7, wherein the container 64 is situated in both the pressure application part and the insertion part 61 of the device. The two parts are joined together by a pressure-and-snap connection, said parts being held together through the medium of a shape locking and press fitting action. Similar to the method described with reference to the first embodiment of the invention, the material expands upon contact with liquid, causing the connection between said two parts to loosen so that the substance enclosed in the container can penetrate out to the plant material.

This described and illustrated device is intended for combating large weeds of the cow parsnip, hog weed type. Because the stems of such weeds are relative soft, the device can be pressed manually into the plants.

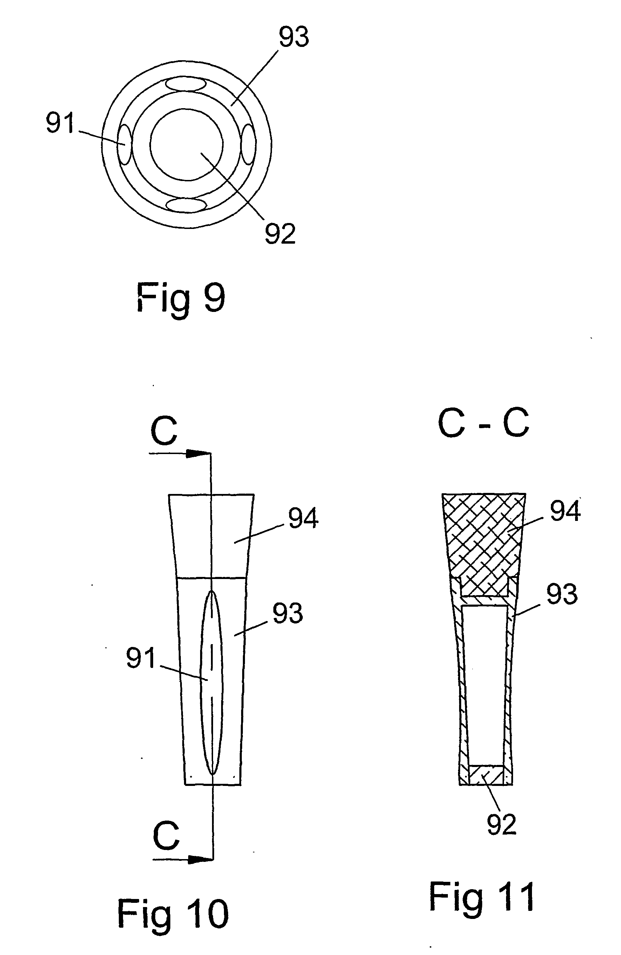

Figure 9 illustrates a third embodiment which has great similarities with the first embodiment and which is primarily intended for the treatment of tree sicknesses. As evident from the figure, the insertion device has a circular cross-section, although it may alternatively have a conical configuration, as more evident from Figure 10. The device also includes thinnings 91 of reduced material thickness, to enable the substance held in the container 93 by the closure 92 to exit from the container more quickly.

Figure 10 is a side view of said device, the thicker end of which comprises an impact part 94 in connection with the container 93.

Figure 11 is a sectional view taken on the line C-C in Figure 10, wherein the impact part 94 is made of wood and connected to the container 93 by a plastic material that consists mainly of carbon atoms and alcohol atoms, for instance polyvinyl alcohol. The container is closed at one end with a closure 92 comprised of the same material as the container 93. The slightly wood impact part, functions as a sealing element, on the one hand, and as a stopper, on the other hand, for protecting the wood subsequent to treatment. The stopper can be removed should it be necessary to repeat the treatment.

## Claims

1. An insertion device comprising a manoeuvring end (1, 62, 94), an insertion end, and a container (2, 64, 93) provided with a container wall (4, 93) and containing a substance consisting of a herbicide or a nutrient, wherein the container is affixed to the manoeuvring end (1, 62, 94) and a closure (3, 92) at the insertion end of the container (2, 64, 93), **characterised in that** the container wall (4,93) is comprised of a hydroplastic material consisting mainly of carbon atoms and an alcohol group; **in that** the plastic material has properties that cause it to expand upon contact with liquid; and **in that** the closure (3, 92) is adapted to co-act with the container wall (4, 93) such that said closure will loosen from the container end as it expands and therewith release said substance, whereafter said plastic material in said device is dissolved by the liquid.

2. An insertion device according to Claim 1, **characterised in that** the container wall (14,93) and the closure (3,92) are both made of the plastic material consisting mainly of carbon atoms and an alcohol group.

3. An insertion device according to any one of Claims 1-2, **characterised in that** a section perpendicular to the longitudinal axis of the device has a generally circular contour line.

4. An insertion device according to any one of Claims 1-3, **characterised in that** the plastic material is resistant to acids and oils.

5. An insertion device according to any one of Claims 1-4, **characterised in that** the outer defining surface of the device has a cylindrical shape.

6. An insertion device according to any one of Claims 1-4, **characterised in that** the shape of said device narrows from the manoeuvring end (1, 62, 94) towards the insertion end.

7. An insertion device according to Claim 6, **characterised in that** the manoeuvring end (1, 62, 94) includes a wooden impact part (94).

8. An insertion device according to Claim 7, **characterised by** at least one thinning (63, 91) along the side of the device.

9. An insertion device according to Claim 6, **characterised in that** the insertion end is pointed (61).

10. An insertion device according to Claim 9, **characterised by** at least one thinning (63) along the side of the device.

11. An insertion method in which a device according to any one of Claims 1-8, is placed in a hole provided in a tree trunk, **characterised in that** the hole has been made to a depth that exceeds the total length of the tubular plug; and **in that** the plug is knocked into the hole with the closure end first.

12. An insertion method according to Claim 11, **characterised by** causing the manoeuvring end (1) of said device to seal against the inner surface of the hole, by applying liquid so as to prevent the herbicide/nutrient substance from leaving the hole.

13. An insertion method according to Claim 12, **characterised by** applying said liquid through the medium of sap.

14. An insertion method in which a device according to any one of Claims 9-10 is applied in a soft plant part, **characterised by** pressing the device manually in the hole with the pointed end of said device first, wherein liquid is applied so that the pointed closure end loosens from the manoeuvring end, causing the herbicide/nutrient substance to penetrate out into said plant part.

## Patentansprüche

1. Einführvorrichtung, welche ein Handhabungsende (1, 62, 94), ein Einführende und einen Behälter (2, 64, 93), der mit einer Behälterwand (4, 93) ausgestattet ist und eine Substanz aufweist, die aus einem Herbizid oder einem Nährstoff besteht, aufweist, wobei der Behälter an dem Handhabungsende (1, 62, 94) und einem Verschluss (3, 92) an dem Einführende des Behälters (2, 64, 93) befestigt ist, **dadurch gekennzeichnet, dass** die Behälterwand (4, 93) aus einem hydroplastischen Werkstoff besteht, welcher hauptsächlich aus Kohlenstoffatomen und einer Alkoholgruppe besteht, dass der plastische Werkstoff Eigenschaften hat, die ihn dazu veranlassen, sich bei Kontakt mit Flüssigkeit auszudehnen; und dass der Verschluss (3, 92) derart ausgelegt ist, dass er mit der Behälterwand (4, 93) zusammenwirkt, so dass sich der Verschluss bei Ausdehnung von dem Behälterende lösen und somit die Substanz ausgeben wird, wonach der plastische Werkstoff in der Vorrichtung von der Flüssigkeit aufgelöst wird.

2. Einführvorrichtung nach Anspruch 1, **dadurch gekennzeichnet, dass** die Behälterwand (14, 93) und der Verschluss (3, 92) beide aus dem plastischen Werkstoff, der hauptsächlich aus Kohlenstoffatomen und einer Alkoholgruppe besteht, hergestellt werden.

3. Einführvorrichtung nach einem der Ansprüche 1 bis 2, **dadurch gekennzeichnet, dass** ein Abschitt, der senkrecht zur Längsachse der Vorrichtung verläuft, eine im Allgemeinen kreisförmige Umrisslinie hat.

4. Einführvorrichtung nach einem der Ansprüche 1 bis 3, **dadurch gekennzeichnet, dass** der plastische Werkstoff restistent gegen Säuren und Öle ist.

5. Einführvorrichtung nach einem der Ansprüche 1 bis 4, **dadurch gekennzeichnet, dass** die äußere begrenzende Fläche der Vorrichtung eine zylindrische Form hat.

6. Einführvorrichtung nach einem der Ansprüche 1 bis 4, **dadurch gekennzeichnet, dass** die Form der Vorrichtung von dem Handhabungsende (1, 62, 94) zum Einführende hin schmaler wird.

7. Einführvorrichtung nach Anspruch 6, **dadurch gekennzeichnet, dass** das Handhabungsende (1, 62, 94) einen Schlagabschnitt (94) aus Holz umfasst.

8. Einführvorrichtung nach Anspruch 7, **gekennzeichnet durch** mindestens eine Verdünnung (63, 91) entlang der Seite der Vorrichtung.

9. Einführvorrichtung nach Anspruch 6, **dadurch gekennzeichnet, dass** das Einführende spitz (61) ist.

10. Einführvorrichtung nach Anspruch 9, **gekennzeichnet durch** mindestens eine Verdünnung (63) entlang der Seite der Vorrichtung.

11. Einführverfahren, bei dem eine Vorrichtung nach einem der Ansprüche 1 bis 8 in einer in einem Baumstamm vorhandenen Öffnung platziert wird, **dadurch gekennzeichnet, dass** die Öffnung mit einer Tiefe hergestellt wurde, die über die Gesamtlänge des rohrförmigen Stopfens hinausgeht; und dass der Stopfen mit dem Verschlussende voran in das Loch geschlagen wird.

12. Einführverfahren nach Anspruch 11, **dadurch gekennzeichnet, dass** das Handhabungsende (1) der Vorrichtung dazu gebracht wird, gegen die Innenfläche der Öffnung abzudichten, indem Flüssigkeit aufgebracht wird, um so zu verhindern, dass die Herbizid-/Nährstoffsubstanz die Öffnung verlässt.

13. Einführverfahren nach Anspruch 12, **dadurch gekennzeichnet, dass** die Flüssigkeit durch Saft als Medium aufgebracht wird.

14. Einführverfahren, in dem eine Vorrichtung nach einem der Ansprüche 9 bis 10 in einem weichen Pflanzen- bzw. "soft plant"-Teil angewendet wird, **dadurch gekennzeichnet, dass** die Vorrichtung mit dem spitzen Ende der Vorrichtung voran manuell in das Loch gedrückt wird, wobei Flüssigkeit aufgebracht wird, so dass sich das spitze Verschlussende von dem Handhabungsende löst, wodurch die Herbezid-/Nährstoffsubstanz dazu gebracht wird, nach außen in das Pflanzenteil einzudringen.

## Revendications

1. Dispositif d'insertion comprenant une extrémité opérationnelle (1, 62, 94), une extrémité d'insertion et un récipient (2, 64, 93) équipé d'une paroi de récipient (4, 93) et contenant une substance constituée d'un herbicide ou d'un nutriment, le récipient étant apposé à l'extrémité opérationnelle (1, 62, 94) et une fermeture (3, 92) à l'extrémité d'insertion du récipient (2, 64, 93), **caractérisé en ce que** la paroi du récipient (4, 93) est composée d'un matériau hydroplastique constitué principalement d'atomes de carbone et d'un groupe alcool ; **en ce que** le matériau plastique présente des propriétés entraînant son expansion au contact d'un liquide ; et **en ce que** la fermeture (3, 92) est adaptée de manière à agir conjointement avec la paroi du récipient (4, 93) de sorte que ladite fermeture glisse depuis l'extrémité du récipient pendant l'expansion et libère en conséquence ladite substance, après quoi ledit matériau plastique dans ledit dispositif est dissout par le liquide.

2. Dispositif d'insertion selon la revendication 1, **caractérisé en ce que** la paroi du récipient (14, 93) et la fermeture (3, 92) sont toutes les deux fabriquées à partir du matériau plastique constitué principalement d'atomes de carbone et d'un groupe alcool.

3. Dispositif d'insertion selon l'une quelconque des revendications 1 à 2, **caractérisé en ce qu'**une section perpendiculaire à l'axe longitudinal du dispositif a une ligne de contour généralement circulaire.

4. Dispositif d'insertion selon l'une quelconque des revendications 1 à 3, **caractérisé en ce que** le matériau plastique est résistant aux acides et aux huiles.

5. Dispositif d'insertion selon l'une quelconque des revendications 1 à 4, **caractérisé en ce que** la surface externe du dispositif est de forme cylindrique.

6. Dispositif d'insertion selon l'une quelconque des revendications 1 à 4, **caractérisé en ce que** la forme dudit dispositif rétrécit depuis l'extrémité opérationnelle (1, 62, 94) vers l'extrémité d'insertion.

7. Dispositif d'insertion selon la revendication 6, **caractérisé en ce que** l'extrémité opérationnelle (1, 62, 94) comprend une partie en bois subissant un choc (94).

8. Dispositif d'insertion selon la revendication 7, **caractérisé par** au moins un amincissement (63, 91) le long du côté du dispositif.

9. Dispositif d'insertion selon la revendication 6, **caractérisé en ce que** l'extrémité d'insertion est pointue (61).

10. Dispositif d'insertion selon la revendication 9, **caractérisé par** au moins un amincissement (63) le long du côté du dispositif.

11. Procédé d'insertion dans lequel un dispositif selon l'une quelconque des revendications 1 à 8, est placé dans un orifice disposé dans un tronc d'arbre, **caractérisé en ce que** l'orifice a été réalisé avec une profondeur qui dépasse la longueur totale de la cheville tubulaire ; et **en ce que** la cheville est enfoncée dans l'orifice par l'extrémité de fermeture en premier.

12. Procédé d'insertion selon la revendication 11, **caractérisé par** le fait d'entraîner le scellage de l'extrémité opérationnelle (1) dudit dispositif contre la surface interne de l'orifice, par l'application d'un liquide afin d'empêcher la substance herbicide/nutritive de sortir de l'orifice.

13. Procédé d'insertion selon la revendication 12, **caractérisé par** l'application dudit liquide par l'intermédiaire de la sève.

14. Procédé d'insertion dans lequel un dispositif selon l'une quelconque des revendications 9 ou 10 est appliqué dans une partie molle d'une plante, **caractérisé par** la pression du dispositif de manière manuelle dans l'orifice avec l'extrémité pointue dudit dispositif en premier, le liquide étant appliqué de sorte que l'extrémité de la fermeture pointue glisse depuis l'extrémité opérationnelle, faisant pénétrer la substance herbicide/nutritive dans ladite partie de la plante.
